# EUROPEAN PATENT SPECIFICATION

(11) **EP 4 623 370 B1**
(45) Date of publication and mention of the grant of the patent: **08.07.2026**
(21) Application number: 23813310.2
(22) Date of filing: 21.11.2023
(51) Int. Cl.: G06N 20/00, G06Q 40/08, G06F 16/908

(54) **OPEN DIGITAL, DATA DRIVEN UNDERWRITING (UW) SYSTEM AND LOSS EVENT SIMULATION PLATFORM AND METHOD THEREOF**
OFFENES DIGITALES DATENGESTEUERTES SCHREIBSYSTEM (UW) UND VERLUSTEREIGNISSIMULATIONSPLATTFORM UND VERFAHREN DAFÜR
SYSTÈME DE SOUSCRIPTION (UW) DICTÉE PAR DES DONNÉES NUMÉRIQUES OUVERTES, ET PLATEFORME DE SIMULATION D'ÉVÉNEMENT DE PERTE ET PROCÉDÉ ASSOCIÉ

(30) Priority: 21.11.2022 CH 13852022; 28.04.2023 CH 4562023
(43) Date of publication of application: 01.10.2025
(73) Proprietor: Swiss Reinsurance Company Ltd., 8022 Zürich (CH)
(72) Inventor: ROWE, Dylan, London N5 2UP (GB); LACUREZEANU, Dan, 8800 Thalwil (CH)
(74) Representative: Leimgruber, Fabian Alfred Rupert
(86) International application number: PCT/EP2023/082609
(87) International publication number: WO 2024/110494

(56) References cited:
- US-A1- 2018 165 768

## Description

### Field of the Invention

The present invention relates to an automated open, digital system for risk-transfer assessment based on risk measurements indicating a potential damage or loss related to a potential undesired negative incident, particularly the invention relates to an open digital system platform comprising such an automated digital system, especially an open automated digital system processing input data of physical measurement values quantifying risk parameters of negative incident, wherein the automated digital system provides one or more risk-transfer scores, which may serve as the basis for insurance policy underwriting, insurance premium evaluation and other risk related transactions.

### Background of the Invention

The insurance industry has grown into a widespread business sector with numerous stakeholders involved for providing various diverse products, services and business models for companies, government units and individuals alike. Small insurance groups, large commercial insurers and reinsurers continuously modify and improve their products and risk coverage packages according to the needs of their customers and newly available technological advancements. Besides mainstream risk protection covering for example life, health, disability, real estate, automobile, travel or legal costs, specialty insurances for unique objects and activities cover for example plants, special talents, body parts, weddings, or alien abductions. A large number of stakeholders is involved in the insurance business. In addition to customers ordering individualized insurance products and insurance carriers providing customized insurance contracts and tariffs, there are underwriting agents, independent insurance brokers, capital providers, risk advisors and others. Additionally, various independent service providers for gathering insurance related information and analyzing risk related information are providing important data for defining a risk-transfer policy and processing for insurance cases.

The digital transformation opens up new technologies and enables data-driven decision making in the field of risk assessment and claims management. Insurance companies switched to risk analysis software to digitally assess and manage risk related data, determine insurance premiums, handle claims data, and track the status of insurance processing. For the insurance industry, digitization is therefore an essential tool for increasing efficiency, optimizing processes, and reducing costs. A key driver of this digital development is data related to insurance risks, damage specifications or customer circumstances. For the insurance industry, data has always been an essential part of any business activities, particularly for risk analysis, stocktaking, and tariff development. Modern data acquisition captures the data while continuously advancing data analytics models allow for precise, reliable, and comparable risk assessment to make informed decisions and help underwriting agencies understand what products and services are successful.

Various digital claim processing systems or risk assessment systems based on data analytics have already been developed. US 2010/0070309 A1 discloses a digital system estimating the risk of loss for a location. The system accesses geographical characteristics associated with a geographical address, considers a plurality of perils and for each peril computes a corresponding measure of the peril that indicates a risk of loss at the geographical address from that peril. A plurality of individual measures of peril are combined to form a combined measure that indicates a combined risk of loss at the geographical address from the plurality of perils. The combined measure is further used to compute an insurance premium for the properties at their geographical addresses. Additional risk factors that can be considered including the distance to various hazard features such as coastline, fault-line, and brushfire risk etc. A further example is shown in US 2015/0294420 A1. A digital system prepares a decision to underwrite a life insurance policy for a consumer. Information about the consumer is obtained, an individual mortality ratio value for the consumer is generated using the applicant information, the mortality ratio value is applied to a population mortality value to generate a mortality risk value for the consumer, and an underwriting decision regarding the consumer is generated based on the consumer 's mortality risk value. Consumer information includes a plurality of data elements, each data element is associated with a characteristic of the consumer.

A risk management platform related to the management of risk including an object database with characteristics data from objects is described in US 7130779 B2. The risk management platform includes a decision support system with a vulnerability assessment tool that uses data objects from the database and decision theory techniques to infer the relative risk of an undesirable event. As part of the relative risk calculation, the platform uses a simulation environment in which artificially intelligent actors interact with the environment to determine susceptibility to the undesired event. The vulnerability assessment tool includes a plug-in structure that allows the tool to interface with existing external consequence calculators. Further, EP 2631858 A1 shows a system for insurance claims processing, which extracts claim data from one or more data sources to obtain a consolidated claims record and removes noise from text data of the consolidated records to obtain a claim dataset. Finally, US 11170450 B1 shows a data processing system for insurance claims analysis and adjudication for obtaining policy coverage data for various insurance policies and insurance claim data associated with an insured user.

Further, US 2018/0165768 A1 discloses a pattern-recognition based system capturing and scanning a workflow object within a workflow pathway by recognizing and identifying block elements of a recognition block-map in the captured workflow object. The system determines a proximity factor relative to each workflow object of a second database, measures a corresponding proximity factor by matching recognized block elements of the captured workflow object with block elements of a workflow object of the second database, provides the measure for the proximity of the two workflow objects based on the mutually allocatable block elements, and generates and assigns a conformity index to the captured workflow object based on the conformity of the recognized block elements with a stored block elements of a first searchable data structure.

However, the rapid development of technological concepts for obtaining, providing, processing, evaluating, and updating insurance related information data and risk assessment models presents a major challenge for keeping the digital insurance systems up to date and competitive. The continuously evolving measuring and analyzing processes and the constant new design of statistical tools and data extraction tools leads to easily obsolete digital insurance systems that are behind technical opportunities to improve reliability and efficiency of risk-transfer assessment, insurance policy design and underwriting support.

### Summary of the Invention

It is one object of the present invention to provide a digital system platform comprising an automated digital system for risk-transfer assessment that allows for fast adaption to new and improved data acquisition and data analytics, enables effective and concurrent evaluation of risk-transfer modalities and improves a data-driven approach to facilitate insurance underwriting processes. Further, the digital system platform and the automated digital system for risk-transfer assessment should allow for enhancing digitization and automation in data handling and processing procedures to align data obtaining and assessing steps, provide efficient information and communication channels, and facilitate decision making for insurance underwriting. In particular, it is an object of the present invention to provide a digital system platform comprising an automated digital system for risk-transfer assessment that improves data accessibility, data quality and data processing of data that is relevant for risk-transfer assessment, that avoids data loss in the short- and long-term, and that supports data exchange across various data related modules.

According to the present invention, these objects are achieved, particularly, by a digital system platform comprising an automated digital system for risk-transfer assessment based on risk measurements indicating a potential damage or loss related to a potential undesired negative incident comprising the features of the independent claim. In addition, further advantageous embodiments can be derived from the dependent claims and the related descriptions.

A digital system platform comprising an automated digital system for risk-transfer assessment according to the present invention is based on risk measurements indicating a potential damage or loss related to a potential undesired negative incident, for example a road accident with damage to a vehicle, a fire leading to loss of property, sever weather conditions impacting economic returns, impaired physical conditions, etc. The digital system according to the invention comprises a processing entity at least comprising a data input structure designed for receiving input data of physical measurement values quantifying a risk parameter captured by measuring devices and a risk-transfer analyzing structure designed for analyzing the input data and allocating one or more risk-transfer scores quantifying the potential damage or loss, and an output signal generator providing the one or more risk-transfer scores as an output signal of the digital system. The output signal with the risk-transfer scores can for example be used as the basis for a risk-transfer policy and for dynamically determining an insurance premium for the risk-transfer.

According to the present invention the digital system platform comprises an open system architecture and a network infrastructure for providing a host environment for one or more external system modules, wherein the one or more external system modules are designed for providing input data for the data input structure and/or for providing an input data processing algorithm for supplementing the risk-transfer analyzing structure. The network infrastructure provides a digital network, like a wired or wireless network structure, a cloud network, etc. established for example by a satellite system and distributed digital storage capacities. The digital network interconnects the automated digital system with external system modules and other digital units, components, devices, etc. relevant for the digital system platform, especially with measuring devices providing physical measurement values quantifying relevant risk parameters.

Further, the digital system platform comprises at least one electronic connector for integrating at least one external system module into the processing entity of the digital system via the network infrastructure. For example, at least one external system module is integrated into the data input structure and/or at least one external system module is integrated into the risk-transfer analysis structure. For example, the open system architecture includes at least one digital architecture section having an open source code accessible for the one or more external system modules. The external system modules can dock on to the automated digital system via the open source code and provide their additional input data and analysis services for the digital system platform.

Further, the digital system platform comprises a security monitor comprising one or more filter means arranged between the digital system and the one or more external system modules, wherein the one or more filter means are defined by security requirements defining required technical characteristics of the one or more external system module for accepting or blocking integration of the one or more external system module into the digital system. The security monitor applies the security requirements to the one or more external system module by comparing the technical characteristics of the external system module with the security requirements. In case the external system module satisfies the security requirements the external system modules is accepted. In case the external system module does not comply with the security requirements it is rejected. The filter means can for example be chosen or adapted according to technical standards of the automated digital system and/or technical standards of user of the automated digital system. Also, the security requirements can be chosen according to expected data quality and/or expected quality of processing results of an external system module.

Furthermore, the digital system platform comprises a searchable system module library providing a listing of acceptable external system modules hosted in the host environment. Once an external system module passed the security monitor and is accepted for integration into the automated digital system, this external system module is listed in the system module library of the platform. The system module library can be located in the automated digital system or hosted elsewhere in the host environment of the digital system platform and searched via the network infrastructure.

The digital system platform provides a computing framework for the open system architecture, the automated digital system and the network infrastructure. The digital system platform facilitates the interaction and integration of the automated digital system, the external system modules and the system module library. The digital system platform serves as the backbone for the risk-transfer assessment and enables interaction and data exchange between measuring devices obtaining quantified physical measurement values of the risk measurements. The input data provided by the measuring devices can be transferred directly to the processing entity of the automated digital system. Alternatively or additionally, it can be captured and/or provided by a system module that is external of the automated digital system, complies with the security requirements of the filter means of the security monitor, and is integrated into the automated digital system. The one or more risk-transfer scores quantifying the potential damage or loss can be based on data and processing services provided by the automated digital system and/or the external system modules. Thus, the output signal of the output signal generator represents a risk-transfer measure based on extended and advances information data and analytics models.

In summary, the invention has inter alia the advantages that the automated digital system can be extended by the input data and the processing algorithms of numerous external system modules in a very short period of time and the automated digital system can be customized according to specific risk-transfer underwriting requirements. The risk-transfer assessment process can be kept up to date by the integration of external system modules based on the most recent technical advancements and according to needs and specifics of risk situations and the potential of undesired negative incidents. For a user of the automated digital system it is easy to search the system module library to add accepted and integrable external system modules that serve his specific needs. The external system modules are quick to be incorporated into the automated digital system to scale up the system.

A user of the digital system platform, like an insurance underwriting company interested in the risk-transfer score for a property, activity, health condition, etc., may access the digital system platform via a user computer device, which connects to the digital system and the open system architecture respectively via the digital network. Advantageously, the user computer device comprises access means for accessing the searchable system module library and selecting one or more external system modules for integration into the digital system for adapting the automated digital system to his specific underwriting needs. Each underwriting company using the automated digital system is able to supplement the input data by additional or alternative input data and extend the analysis process by supplement risk-transfer analysis processes provided by implementing one or more external system modules to their automated digital system. This way the use of newly available input data and digital data processing significantly improves a data-driven risk-transfer analysis approach.

In an embodiment variant of the digital system platform the network infrastructure is a cloud-based infrastructure providing access to the open system architecture for the one or more external system modules via a wireless digital network. The cloud-based infrastructure provides a virtualized data and computing infrastructure. It comprises server components, storage components, computing components, networking components, virtual layer components and any other components required to establish the open system architecture and advantageously also for the external system modules. A plurality of users can easily access the automated digital system and the external system modules at the same time via the digital network and receive customized risk-transfer scores for their insurance needs.

In an example embodiment variant of the digital system platform one or more external system modules are third party modules technically independent from the automated digital system. For example, the third party external system modules may be developed for other technical requirements but enabled to be integrated into the automated digital system via the electronic connector. For example, the third party external system modules may be modules based on industry 4.0 standards. The modules may be designed for a consumer product or part of a consumer product, such as wearable electronic devices, e.g. in form of smart watches, smart bracelets, smart glasses, smart belts etc., and may be comprising one or more measuring devices for capturing physiological measurements like a heart rate, steps per day, pulse rate, oxygen levels, etc. Further, the third party external system modules may be part of vehicle driving systems, which for example comprise measurement sensors to observe a driving behavior, e.g. by measuring speed, driving duration, deceleration period, eye movement of a driver, etc. Also, the third-party external system modules may be part of a property surveillance system comprising cameras and other surveillance devices for measuring activities in or near the property and/or observing temperature, humidity, and other environmental parameters. Furthermore, the third party external system modules may be part of weather or geographical observation systems comprising measurement devices for detecting temperature, rain, snow or hail quantity, wind force, visibility, location, terrain gradient, etc. In summary, any type of external system module that provides data of physical measurement values capable of quantifying a risk parameter of a potential undesired negative incident or that comprises an input data processing algorithm capable of supplementing the risk-transfer analysis structure of the automated digital system for the one or more risk-transfer scores may be suitable for integration into the automated digital system as long as the external system module complies with the security requirements of the security monitor. Quality standards can e.g. be set to comply with a predetermined confidence level of correct (e.g. reviewed) input data or correct (e.g. reviewed) results of input data processing.

In one example of the security monitor the security requirements of the filter means set quality standards for the external system modules. For example, the security requirements are set to comply with a predetermined confidence level of correct input data or correct results of an input data processing algorithm provided by an external system module. For example, the confidence level is set to 80%, which means 20% of the results are wrong. However, the information about the predetermined confidence level can be compensated for by the risk-transfer analysis structure during the risk-transfer assessment.

In another embodiment variant of the digital system platform the data input structure comprises data extraction means for automatically capturing input data providing physical measurement values of risk parameter measurements of measuring devices via one or more external system module. The extraction means serves as a receptor of the input data captured and provided by the external system module. The extraction means may for example connect to a data storage of the external system module. It may comprise a classification algorithm for classifying the input data, a filter algorithm for filtering out non-relevant data and/or a labelling algorithm for labelling specific input data. As a result, the extraction means allows for consistency of the data entered into the automated digital system. For example, the physical measurement values captured by the extraction means may include technical property characteristics values, environmental characteristics values, physiological characteristics values and/or statistical characteristics values. Technical property characteristics values may for example indicate a motor power of a vehicle, a heat dissipation capacity of a building, a breaking resistance of glass, etc. Environmental characteristics values may for example indicate a temperature, solar radiation force, rain capacity, snow fall, etc. Physiological characteristics values may for example indicate body temperature, blood alcohol content, heart rate, sleep rhythm, etc. Statistical characteristics values may for example indicate an average fuel consumption, an average daily temperature, a deviation from a standard oxygen level number of emergency stops per person, etc.

In a further embodiment variant of the digital system platform the risk-transfer analyzing structure of the processing entity comprises at least one synchronization segment for automatically synchronizing and integrating an input data processing algorithm of one or more external system modules into the risk-transfer analyzing structure. The synchronization segment streamlines the risk-transfer analysis structure of the automated digital system and the input data processing algorithm of an external system modules to be integrated so that the data analysis process performed by the risk-transfer analysis structure can be extended by one or more process steps performed by the input data processing algorithm. The one or more external system modules may for example provide an input data processing algorithm including a data standardizing algorithm for standardizing the input data for the use of the data input structure, a measurement value comparison algorithm for comparing values of the automated digital system and the external system module, a measurement value weighing algorithm, data validation algorithm and/or a machine learning algorithm. These algorithms of an external system module are integrable to the risk-transfer analyzing structure of the automated digital system via the synchronization segment. The synchronization segment ensures the process flow between the external system modules and the risk-transfer analysis structure of the automated digital system. The synchronization segment can also be combined with the data extraction means. Thus, the data extraction means is for example able to standardize, validate, etc. the input data while importing the data from an external system module into the automated digital system.

In a further embodiment variant of the digital system platform the security monitor can comprise a firewall module, a security module and/or a gateway module for selectively blocking integration of an external system module into the digital system. Further, the security monitor may be designed for having filter means that are adaptable to specific risk-transfer characteristics. For example, the security requirements of the one or more filter means comprise risk-transfer policy requirements defining required risk-transfer characteristics of the one or more external system modules in addition to the technical characteristics requirement. The risk-transfer policy requirements can be defined by a user of the automated digital system and will automatically be incorporated into the filter means of the security monitor. Thus, the digital system platform can be customized to the needs of the user. Further, the security monitor may comprise a rendering algorithm or indexing algorithm for indexing an external system module that passed the filter means. An index assigned to an external system module can for example represent specifics of the external system modules. The indexing may be used by the system module library as a searchable feature.

In still a further embodiment variant of the digital system platform the automated digital system comprises a search engine for searching the listing of secure integrable external system modules of the system module library. The listing of external system modules of the system module library may list characteristics of each external system module, such as configuration data, documentation, classification, type specification, subroutines, etc. The search engine comprises a search algorithm for identifying such characteristics and/or input data related to potential damage or loss data and/or related to potential undesired negative incident input data and/or for identifying input data processing algorithms of the external system modules. The search engine is designed for finding useful external system modules that supplement the input data and the risk-transfer analysis structure of the automated digital system, for example according to keywords entered by a user into the search engine. The search engine is for example configured to search indexes of the external system modules provided by the security monitor, search labels provided by the external system module providers, search for data standards, processing algorithm standards, etc.

In another embodiment variant of the digital system platform the at least one electronic connector for integrating at least one external system module into the digital processing serves as interface between the automated digital system and the external system modules. The electronic connector may comprise an application programming interface for automated integration of one or more external system modules into the processing entity. The application programming interface supports the incorporation of digital processes established by the external system modules into the processes of the automated digital system. Further, the electronic connector may comprise a no-code development structure for integrating a processing algorithm of an external system module into the automated digital system.

In a further embodiment variant of the digital system platform the security monitor may comprise a validation protocol for repeated application of the one or more filter means to the one or more external system modules. i. e. for repeated validation of the external system modules. The validation protocol may initiate a security check by applying the one or more filter means in predefined time intervals to the external system modules in the system module library. Also, the validation protocol may initiate a security check each time an external system module is selected from the system module library for integration into the automated digital system. In case of non-compliance with the security requirements of the filter means the validation protocol may initiate cancellation of the respective external system module from the listing of acceptable external system modules or search the host environment for an updated version of the respective external system module that complies with the requirements. Advantageously, the security monitor may comprise a feedback loop providing feedback information to an external system module, which is filtered out by the filter means. Thus, the external system module may be updated for compliance with the requirements.

In yet a further embodiment variant of the digital system platform the automated digital system may comprise a subscription unit with a counting module for counting activation of the one or more external system modules by the automated digital system. The counting module counts connection or access of the automated digital system to one or more external system modules and the application thereof, i. e. the extraction of input data provided by an external system module or the use of the input data processing algorithm provided by an external system module. The subscription unit can be used for determining a subscription fee for a user of the automated digital system that incorporates external system modules into the digital system. The fee can be charged for a first time activation, for monthly usage, for each individual application, etc. Thus, an insurance underwriter can customize the use of the automated digital system according to his or her needs and is in control of the pricing for using the digital system platform as underwriting platform.

The digital system platform comprising an automated digital system for risk-transfer assessment according to the invention integrates new data generated for example by consumer products such as wearables and industry 4.0 devices and facilitates new and improved underwriting models using additional and/or alternative data such as steps, heart rate, personal financial data, etc. which are often not covered by conventional automated digital systems and risk assessment processes. Such new underwriting models improve decision making for all stakeholders involved in the insurance value chain. For example for insurance underwriters, the need to test, validate and integrate new underwriting rules and models into their existing underwriting digital system is clearly simplified. For third party external system modules owners, the integration of their models into an already complex automated digital system and systems architecture is made easy. For providers of a digital system for automated risk-transfer assessment, the validation of requests of multiple third-party providers for integration of their external system modules is automated and executed reliably. The digital system platform fully supports a transition of an existing automated digital system from a rules-based, philosophy driven approach to a data driven approach supported by data modelling.

The strength of existing automated digital systems can be combined with the advantages of providing an open platform system and facilitating the adaption of the system to new data and data processing concepts. The open digital system platform of the invention provides, inter alia, search facilities allowing a user to search for new data measurements and underwriting models by simply accessing the curated system module library for the digital system platform. The open digital system platform provides a plug and pay approach which allows a user to save time for testing new underwriting models within the existing automated digital system rather than set up a separate independent underwriting process in addition to the existing system. Further, the digital system platform of the invention allows to minimize technical and legal due diligence of third party underwriting models and their tech stacks. Finally, the open digital system platform of the invention can provide a single billing port of third party underwriting model fees through the automated digital system.

### Brief Description of the Drawings

The present invention will be explained in more detail below relying on examples and with reference to these drawings in which:

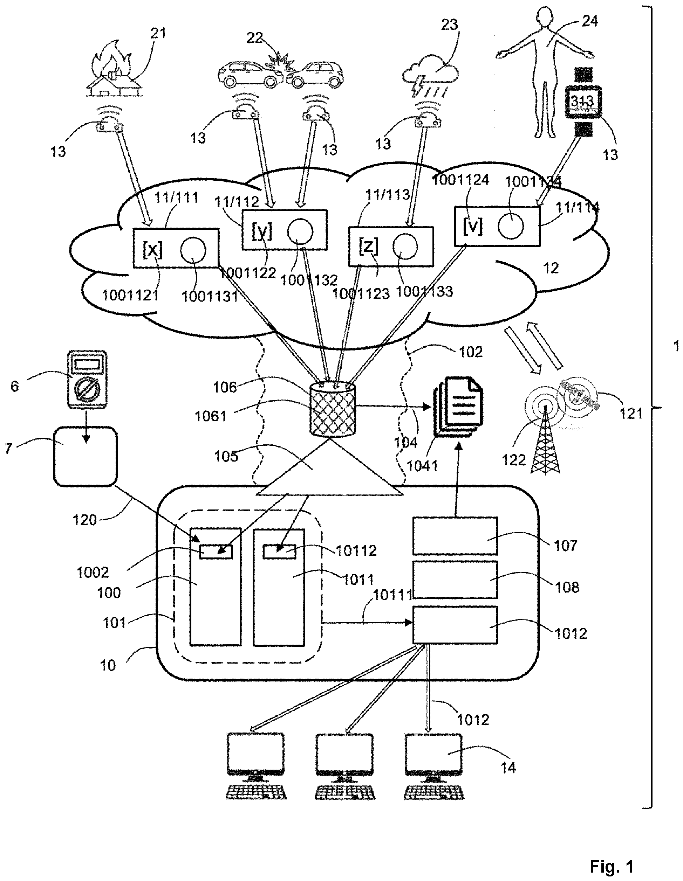

Figure 1 shows a schematical illustration of an exemplary open digital system and platform 1 comprising automated digital system according to the invention. The open, digital data driven underwriting and loss event simulation platform 1 comprising an automated digital processing core 10 for risk-transfer assessment based on risk measurements providing measures for potential damages or losses related to a future occurrence of a defined loss event 2 causing a physical impact or loss 4 to an event-exposed structure, object or individual 3, wherein the automated digital processing core 10 comprises a processing entity 101 with a data interface 100 for receiving input data 10011 of physical measurement values 100111 quantifying a risk parameter captured by measuring devices 6 and a risk-transfer analyzing structure 1012 for processing the input data 10011 and allocating one or more risk-measure scores 10121 quantifying the potential damage or loss, and an output signal generator 1012 providing the one or more risk-measure scores 10121 as an output signal 10012 of the automated digital processing core 10.

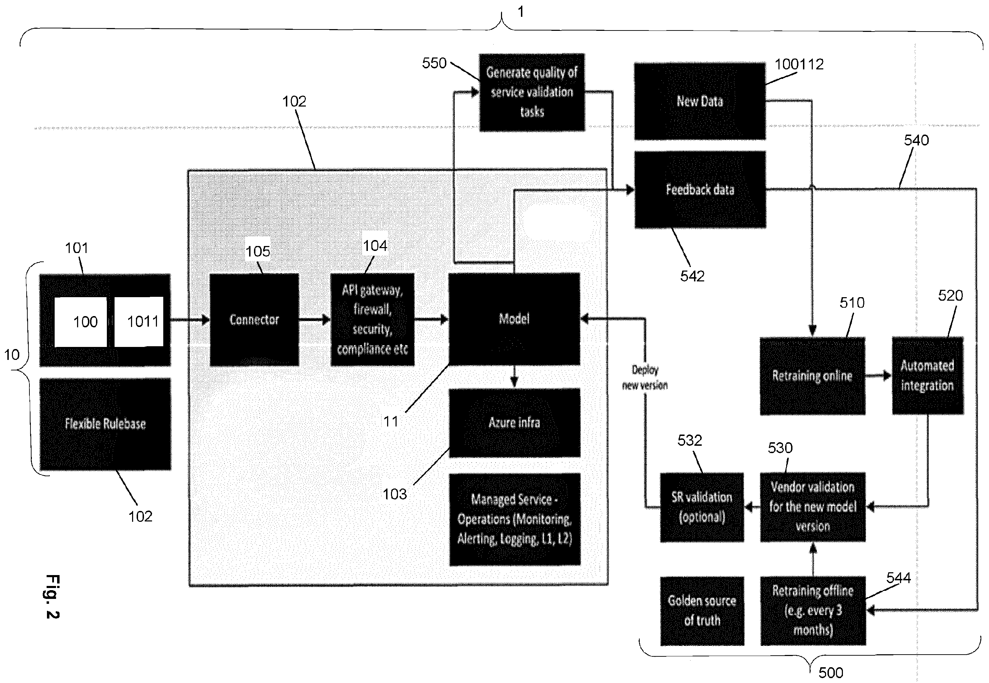

Figure 2 shows a block diagram, schematically illustrating an exemplary process of automated integration of an external system module into an automated digital system of a digital system platform according to the invention.

### Detailed Description of the Preferred Embodiments

Figure 1 schematically illustrates a digital system platform 1 which includes an automated digital processing core 10 for risk-transfer assessment based on risk measurements indicating a potential damage or loss related to a potential undesired negative incident according to the invention. In the shown example, a potential undesired negative incident is mentioned as a fire incident 2, a vehicle accident 3, a weather peril 4 and a health thread 5. Of course, numerous other undesired negative incidents may cause damage or loss that may be subject of a risk transfer assessment by the automated digital processing core 10 of the digital system platform 1.

The automated digital system 10 comprises a processing entity 101 which at least comprises a data input structure 100 designed for receiving input data of physical measurement values quantifying a risk parameter and a risk-transfer analyzing structure 1011 designed for analyzing input data and allocating one or more risk-transfer scores 10111 quantifying the potential damage or loss. For example, input data 10011 of physical measurement values are captured by measuring devices 6, for example thermometers, pressure gages, optical sensors, spectrometers or any other devices that capture measured values of physical parameters. The input data 10011 obtained by the measurement devices 6 may be stored in a database 7, that can be a cloud-based storage 7 or any other type of suitable digital data storage that is accessible by the automated digital system 10. Further, the automated digital system 10 comprises an output signal generator 1012 providing the one or more risk-transfer scores 10111 as an output signal 10012 of the digital system 10 as a result of the risk-transfer assessment.

The digital system platform 1 according to the invention comprises an open system architecture 102 and a network infrastructure 103 for providing a host environment. The network infrastructure 103, for example is set up by a system of satellites 211 and ground antennas 212. In the example, the host environment is a virtual cloud environment 220. The host environment is able to host a plurality of external system modules. The example illustrated in Figure 1 depicts only four external system modules 11/111,...,114 for keeping the example easily understandable. However, many more external system modules may be hosted in the host environment of the digital system platform 1. The external system modules 11/111,...,114 are designed for providing external input data 100112/1001121,..., 1001124 for the data input structure 100 and/or for providing an input data processing algorithm 100113/1001131,..., 10011314 for supplementing the risk-transfer analyzing structure 1011. The exemplary external system modules receive their external input data from measuring devices detecting physical measurement values which quantify a risk parameter related to the potential undesired negative incident. The external system modules are for example third party modules that are technically independent from the automated digital system 10. They can be designed as applications for completely other purposes than risk-transfer assessment. For example, they are developed for fire protection, driver assistance, weather forecasting, health control or the like. However, it is also possible to implement external system modules that are developed for example as optional implementation to the automated digital system 10 and are provided by the same or related technical development as is the automated digital system 10.

The external system modules 11/111,...,114 of Figure 1 can be exemplified as follows for a better understanding of the functioning of the digital system platform 1. The external system module 111 is designed as a fire risk module capturing fire risk data 1001121 as input data from a property sensor system 13 surveilling property parameters such as indoor and outdoor temperature, air humidity, smoke density, etc. The external system module 112 is designed as a driver assistance module capturing driving data 1001122 as input data from a vehicle driver assistance system 13/1001132 detecting driver, vehicle, and environmental parameters such as temperature, vehicle speed, daylight intensity, vicinity movements, driver eye movement, etc. As shown in the example, input data of more than one measuring device, in this case driver assistance systems 1001122, can be captured by the external system module. The external system module 113 is designed as a weather observation module capturing weather data 1001123 as input data from a weather sensor system 13 observing weather related parameters such as temperature, rain fall, snow fall, cloud coverage, atmospheric pressure, wind force, etc. The external system module 114 is designed as a body examination module in form of a wearable device, in the shown example a watch. The external system module 114 captures physical body parameter data 1001124 as input data from a body sensor system/wearable 13 of the watch, which observes physical body parameters such as body temperature, heart rate, pulse, oxygen level, blood pressure, etc.

The fire risk module 111 comprises an input data processing algorithm designed as fire risk assessment algorithm 1001131 allocating a fire risk measure for a predetermined combination of temperature values and smoke density values. The driver assistance module 112/1001132 comprises an input data processing algorithm designed as slow reaction warning algorithm 1001132 allocating a slow reaction risk indicator to captured values of eye movement or driving time. The weather observation module 113 comprises an input data processing algorithm designed as weather forecast algorithm 1001133 allocating a strong wind forecast indicator based on the captured atmospheric pressure values, wind force values and other relevant weather parameter values. The body examination module 114 comprises an input data processing algorithm designed as examination algorithm 1001134 providing a warning signal in case of blood pressure and/or pulse measurement values that exceed a predetermined maximum value. The external system modules may comprise many other input data processing algorithms designed for other goals of the modules. As mentioned earlier, a plurality of other external system modules can be suitable for providing input data and/or input data processing algorithms for supplementing the processing entity 101 of the automated digital system 10. Advantageously, input data processing algorithms that require updating in short frequencies, e.g. due to fast technological advancements in the technical field or due to rapid adaption malware attacks, are incorporated into the automated digital system 10 by using external system modules. Such external input data processing algorithms for example provide a measurement value comparison algorithm, a data standardizing algorithm, a measurement value weighing algorithm, data validation algorithm, various types of machine learning algorithm and many others.

Further, the digital system platform 1 according to the invention comprises at least one electronic connector 105 as an interface for integrating the external system modules 11/111,...,114 into the processing entity 101 of the automated digital system 10 via the network infrastructure 103. The electronic connector 105 is for example realized as an application programming interface that connects to the automated digital system 10 via the open-source algorithm 102. Further, a security monitor 106 is arranged between the automated digital system 10 and the one or more external system modules 11/111,...,114.The security monitor 106 comprises one or more filter means 1061, which are defined by security requirements setting required technical characteristics of the external system modules 11/111,...,114 for accepting or blocking their integration into the digital system 10. The security requirements can for example be defined by industry standards for software integration for preventing disruption, damage, or unauthorized access of the automated digital system and for blocking any kind of spyware, ransomware, viruses or other malicious software. The security monitor may comprise a firewall module, a security module and/or a gateway module as filter means for selectively blocking integration of an external system module into the digital system 10. In addition to the technical characteristics requirements, the security requirements of the filter means may comprise risk-transfer policy requirements defining required risk-transfer characteristics for the one or more external system modules. As such, the risk-transfer policy requirements may define thresholds for input data volumes, relevance tests for processing algorithms, confidence levels for data validation and processing results and the like for avoiding integration of external system modules that are unsuitable for a specific automated digital system design for a specific user.

Further, the digital system platform 1 according to the invention comprises a searchable system module library 104, which provides a listing of acceptable external system modules hosted in the host environment. The system module library 104 lists external system modules that passed the filter means 1061 of the security monitor 106 and therefore are checked for compliance with the needs of the digital system 10 and are secure to be installed. The system module library 104 may receive a listing signal 1041 from the security monitor 106 about an acceptable external system module. The listing signal initiates the listing of the external system module in the system module library 104, or initiates cancellation of an external system module. The system module library may list the external system modules according to risk parameter types, processing algorithm types, labels, indexes, module names, classifications or any other module characteristics that are suitable as a search term. The system module library 104 may be located within the automated digital system 10 or may be based in the cloud infrastructure, as in the example shown in Figure 1. Preferably, the automated digital system 10 comprises a search engine 107 for searching the listing of acceptable external system modules in the system module library 104. The search engine 107 comprises a search algorithm for identifying external system modules that are match with the search term. Also, the search engine 107 may be configured for identifying input data related to potential damage or loss data and/or input data related to potential undesired negative incidents and/or for identifying input data processing algorithms of external system modules that supplement the risk-transfer analysis structure 1011 of the automated digital system 10. The search engine scans the system module library 104 for a specific data type, algorithm type, label, index, class, module name, etc. for example based on keywords, phrases, numbers, etc.

In the shown example, three user computer devices 14 are connected to the digital system platform 1 and the automated digital system 10. Further, the user computer devices 14 are connected to the digital network of the network infrastructure 103. The user computer devices 14 comprise access means for accessing the searchable system module library 104 and selecting one or more external system modules for integration into the digital system according to their specific use case. Thus, a user of the automated digital system 10 can search for a useful external system module and decide about incorporating the module into the system. The user can customize the automated digital system 10 according to his or her needs by supplementing the digital system 10 with input data processing algorithms of the external system modules or by adding or altering input data of physical measurement values provided by the external system modules. As a result, each computer devices 14 has access to an individualized automated digital system, which may be based on differing external system modules chosen by each user.

To capture input data from the external system modules the data input structure 100 comprises a data-extractions means 10012 for automatically obtaining such input data. The extraction means 10012 may be configured to receive technical property characteristics values, environmental characteristics values, physiological characteristics values and/or statistical characteristics values, such as the example data 100112/1001121,...,1001124 of the external system modules 11/111,...,114. The risk-transfer analyzing structure 1011 comprises at least one synchronization segment 10112 for automatically integrating an input data processing algorithm of the external system modules, like the algorithms 100113/1001131,...,10011314, into the risk-transfer analyzing structure 1011. The synchronization segment 10112 for example incorporates the input data processing algorithms of an external system module as a sub-model into the risk-transfer analysis model of the structure 1011, e. g. in series with the risk-transfer analysis structure 1011 or parallel as an alternative to some sections of the analysis structure 1011.

In the example digital system platform 1 shown in Figure 1, the automated digital system 10 comprises a subscription unit 108 with a counting module for counting activation of the external system modules 11/111,...,114 by the automated digital system 10. The counting module counts the use of the external system modules for example by tracking connection or access of the automated digital system 10 to external system modules, downloaded data volumes or the application of their processing algorithms. The count may serve as the basis for billing the use of the external system modules via the automated digital system 10. The count may also be used for statistical surveys of the use of the external system modules.

The digital system platform 1 according to the invention facilitates quick adaption to new and improved data acquisition and data analytics by incorporating external system modules that provide fresh data and most up-to-date processing algorithms, while the automated digital system 10 provides a robust and reliable core system for risk-transfer assessments. The digital system platform 1 enables effective and concurrent evaluation of risk-transfer modalities and improves a data-driven approach to facilitate insurance underwriting processes. It accelerates digitization and automation in data handling and processing procedures for risk-transfer assessment, insurance underwriting management and insurance premium calculation for all needs of insurance stakeholders.

Figure 2 shows a schematical illustration of an exemplary process of automated integration of an external system module into an automated digital system 10 of a digital system platform 1 according to the invention. The automated digital system 10 comprises a core processing unit 101 which includes the data input structure 100 and the risk-transfer analysis structure 1011 for performing the risk-transfer assessment based on risk measurements indicating a potential damage or loss related to a potential undesired negative incident. The automated digital system 10 further may comprise a flexible rule base module 102, which represents assessment criteria for the risk-transfer assessment, individual security requirements, or other user specific characteristics of the automated digital system 10. The digital system platform 1 comprises the open-source architecture 102 and the network infrastructure 103, which host external system modules, for example module 111. The automated digital system 10 is interconnected with external system modules via the electronic connector 105 and the security monitor 106. In case an external system module requested by a user passes the security monitor, it can be incorporated into the automated digital system 10 via the connector 105 and supplement the digital system according to the user request.

The external system modules in this example are subject to a training and validation process 500, which prepares and updates the external system modules for the integration into the automated digital system 10. The external system modules receive input data, for example input data 1001121. In a training step 510, the input data is prepared for acceptance by the security monitor 106 and uploaded to the data input structure 100. Further, the input data processing algorithm, like the algorithm 100113/1001131,..., 10011314, is trained to process the input data. In an automation step 520, the data and the algorithm are configured for automated integration into the processing entity 101 of the automated digital system 10. In a validation step 530, an external system module is validated before it is placed in the host environment for access by the automated digital system 10. Optionally, the validation step 530 may include validation step 532. The validation step 530 can e.g. ensure predefined quality standards set to comply with a predetermined confidence level of correct input data or correct (e.g. reviewed) results of input data processing.

The exemplary process also includes a feedback loop 540 providing feedback information about an external system module. Preferably the feedback loop 540 is initiated and/or defined by the security monitor 106 in case an external system module is filtered out by the filter means 1061. The security monitor 106 provides feedback data in a feedback step 542. Thus, security monitor 106 can refer on one hand to typical technical security capabilities as firewalls etc. and on the other hand to other processes such as the training and validation process 500, which prepares and updates the external system modules for the integration into the automated digital system 10, as discussed above. Preferably the feedback loop 540 can e.g. be initiated and/or defined by the security monitor 106. The feedback data is used in a retraining step 544, which adapts the input data and/or input data processing algorithms of the external system module according to requirements of the feedback step 542. Also, the security monitor 106 may comprise a validation protocol or repeated application of the security requirements of the filter means to the external system modules. The security monitor 106 provides feedback data and initiates the retraining step according to the validation protocol. The retraining can be scheduled for regular repetition, for example every three month, to retrain and validate the external system modules. After the retraining step 544, the module is validated in the validation step 530 and placed in the host infrastructure and in the system module library 60 as an updated version of the external system module. Additional quality control steps may be part of the feedback process, for example, a quality-of-service validation step 550 that provides additional information to the feedback data 542.

Preferably, the feedback loop 540 provided by the security monitor 106 includes machine learning algorithms to allow learning for the external system modules based on past data and on a random task sampling approach. Further, the feedback loop is best optimized based on a golden source of truth approach. It is one of the advantages that the present invention allows to remove variations in data strategies, where inhomogeneous data silos of a company may provide an uncontrollable systematic error, since the inventive system allows to replace them with a golden source of truth. In the prior art, data silos typically create an environment where different companies or even unit functions within a company view or process data in different ways, technically resulting in a loss of time and/or cost due to duplicated or inaccurate data, mishandling and/or misinterpretation, or even introducing systematic errors distorting the resulting measuring and/or indexing values. Having one golden, not biased source of truth can be critical for systems to adjust processes and allow to implement data governance. In particular, systems are more and more required to adhere to new, more stringent, and more frequent changes, meaning quick, transparent, and easily accessible fund data is required for measuring and/or audit and reporting processes. Transparency is key from a technical perspective and having control and clarity of all the data involved in data processing can mitigate technical risk correlated and/or systematic errors biasing the technical operation of the system.

It is questionable how accurate and reliable data sources truly are. Especially, as they are prone to data cleaning processes as well as other types of outages, random errors, and gaps. The cleaning processes, errors, and outages raise questions as to whether data sources, even of measuring data, technically can represent an objective truth or is any interpretation necessarily biased by some subjective filter given the way that data is cleaned. Similarly, data loss, another frequent occurrence, refers to the situation when information is destroyed by failures or neglect in storage, transmission, or processing. Typically originating in internal sources, such errors, outages, and losses in large data sets are amplified when multiple data sets are pulled together. Additionally, another source of concern is the internal choice of data to be mined or processed, and information to be processed and/or analyzed. After all, data mining can forever reflect and maintain the preconceptions and biases of former processing or mirror the widespread biases that exist in data capturing. Even in situations where data miners are extremely careful and their processing systems monitored, they can still affect discriminatory results with models that, quite unintentionally, pick out proxy variables for protected classes.

In the prior art, abnormal pattern prediction problems, as discussed above, are characterized by the simultaneous presence of skewed data, a large number of unlabeled data and a dynamic and changing pattern. The inventive system, proposed herein, can be based on semi-supervised techniques, which allows to apply a new metric, i.e. a cluster-score, for abnormality or bias detection which can deal with these technical challenges. Specifically, the methodology can involve transmuting unsupervised models into supervised models using the cluster-score metric, which defines an objective boundary between clusters and evaluates the homogeneity of the abnormalities in the cluster data construction, which goes beyond isolated data sources of the prior art. First, semi-supervised techniques can be applied to the anomaly detection solving0 three combined problems: skewed data, unlabeled data and change in patterns, without making any subjective assumption that can bias the results. Second, a metric can be created based on the logic behind the F-Score which permit to measure the purity of abnormalities in the data sources as clusters. Finally, an abnormality detection system can be built which is applied to an actual loss event problem, using various different real-world dataset provided by the external data sources. One of the main technical problems in applying unsupervised modelling can be having to define a subjective boundary. Typically, there is only partial information about anomalies, but the system has to determine an acceptable threshold at which data can be considered anormal. When applying unsupervised classification modeling, the dimensions to data and/or external data clusters can be reduced containing mixed-type data (anormal and unknown). At the beginning, a boundary line can be drawn so that the system accepts only cases of known abnormality. The applied unsupervised classification modeling thus starts improvements from there on.

The digital system platform and the automated digital system for risk-transfer assessment according to the invention allow for accelerated data acquisition and modern up-to-date data processing. It provides efficient information and communication channels, and facilitates fast decision making for insurance underwriting. In particular, the digital system platform improves data accessibility, data quality and data processing of data that is relevant for risk-transfer assessment and supports data exchange across various data related modules and models, which may not even have been developed for risk-transfer purposes.

### List of references

1 Open, digital data driven underwriting system / open loss event simulation platform / open digital risk assessment platform
   10 Automated digital processing core
      100 Data interface / data input structure
         1001 Data signaling
            10011 Input data
               100110 Damage/loss data
               100111 Measuring parameter values of loss/risk events, e.g. weather measuring data
               100112 Object or individual characteristic parameters
                  1001121 Fire susceptibility and vulnerability object data
                  1001122 Driving/flying/shipping data / telematics measuring data
                  1001123 Weather susceptibility data
                  1001124 Body measuring data
               100113 Input data processing modules
                  1001131 Fire risk assessment algorithm
                  1001132 Driving risk assessment
                  1001133 Weather forecast algorithm
                  1001134 Health/life risk algorithm
            10012 Output signaling
         1002 Data extraction means
      101 Processing entity
         1011 Risk-transfer analysis structure
            10111 Risk-measure scores
            10112 Synchronization segment
         1012 Output signal generator
      102 Open-source architecture
      103 Network infrastructure
         1031 Cloud-based network infrastructure
      104 Searchable system module library
         1041 Listing signal
      105 Electronic connector
         1051 Application programming interface
      106 Security monitor
         1061 Filter means
            10611 Settable security parameters
         1062 Firewall module
         1063 Security module
         1064 Gateway module
         1065 Validation protocol
         1066 Feedback loop
      107 Search engine
      108 Subscription unit
   11 External forecast modules / external system modules
      111 External fire risk module
      112 External accident risk module
      113 External weather hazard risk module
      114 External health/life risk module
   12 Digital data transmission network/Network infrastructure
      121 Satellite
      122 Ground antenna / Cellular network
   13 Measuring devices/sensors
   14 User client device
2 Physical loss event, i.e. occurring physical event having a measurable impact on an event-exposed structure, object or individual
   20 Natural catastrophe events
      201 Earthquake events
      202 Volcanic events
      203 Drought events
   21 Fire event
   22 Vehicle accident
   23 Weather event
      231 Storm hazard
      232 Hurricane
      233 Flood event
   24 Life/Health event
      241 Health event (illness)
      242 Life event (death)
      243 Critical illness
3 Event-exposed (risk-exposed) structure, object or individual
   31 Individual
      311 Physical body parameter data
      312 Illness-related data
      313 Body sensors/wearables
      314 Clinical and laboratory measuring devices
   32 Structure
      321 Building
      322 Agriculture structure
      323 IT structure
      324 Fire susceptibility and vulnerability object characteristic data
      325 Building sensors/Smart structure monitoring sensors
   33 Object
      331 Motor vehicle
      332 Ship vessel
      333 Airplane
      334 Telematics sensors / driver assistance module
         3341 Driving/flying/shipping measuring data
   34 Environment
      341 Weather stations (air-based/land-based)
         Weather measuring data
      342 Satellite-based measuring devices
         3421 Optical measuring data
      343 Inundation/Water level measuring data
      344 Earthquake and seismograph measuring sensors
         3441 Earth movement data/earthquake measuring data
4 Physical impact/loss caused by a physical loss event to an event-exposed structure, object or individual
5 Data processing
   500 Training process
   510 Training step
   520 Automation step
   530 Validation step
   532 Validation step
   542 Feedback step
   544 Retraining step
   550 Service validation step
6 Measuring device
   61 Wearables
   62 Smart sensors
   63 loT/Industry 4.0 sensors
   64 Telematic sensors and devices
7 Cloud-based storage

## Claims

1. An open, digital data driven underwriting and loss event simulation platform (1) comprising an automated digital processing core (10) for risk-transfer assessment based on risk measurements providing measures for potential damages or losses related to a future occurrence of a defined loss event (2) causing a physical impact or loss (4) to an event-exposed structure, object or individual (3), wherein the automated digital processing core (10) comprises a processing entity (101) with a data interface (100) for receiving input data (10011) of physical measurement values (100111) quantifying a risk parameter captured by measuring devices (6) and a risk-transfer analyzing structure (1012) for processing the input data (10011) and allocating one or more risk-measure scores (10121) quantifying the potential damage or loss, and an output signal generator (1012) providing the one or more risk-measure scores (10121) as an output signal (10012) of the automated digital processing core (10), wherein the open data driven system (1) comprises
an open system architecture (102) and a network infrastructure (103) for providing a host environment for a plurality of external system modules (11), the plurality of external system modules (11) providing input data (10011) over the data interface (100) and providing input data processing modules (100113) being allocated as data processing part to the risk-transfer analyzing structure (1011),
an electronic connector (105) for providing access for the external system modules (11) to the processing entity (101) of the automated digital processing core (10) via the network infrastructure (103), wherein the open system architecture comprises at least one digital architecture section having open source code accessible for the external system modules (11), and wherein the external system modules (11) are docked on to the automated digital processing core (10) via the open source code by providing their input data (10011) and input data processing modules (100113) to the digital system platform (1), and the external system modules (11) are integrated into the risk-transfer analyzing structure (1011) as processing entity via the network infrastructure,
a security monitor (106) comprising one or more filter means (1061) arranged between the digital processing core (10) and the one or more external system modules (11), wherein the one or more filter means (1061) comprise settable security parameters (10611) defining technical characteristic parameter values for the one or more external system modules (11) for accepting or blocking an access of the one or more external system modules (11) to the digital processing core (10),
an input data processing structure (100113) provided by the one or more external system modules (11), including a measurement value comparison structure comparing values of the automated digital system and the one or more external system modules (11), a data standardizing structure, a measurement value weighing structure, data validation structure for repeated application of the one or more filter means to the one or more external system modules (11) initiating a security check, in predefined time intervals, by applying the one or more filter means to the one or more external system modules (11) in the system module library, a machine learning structure, which is integrable to the risk-transfer analyzing structure via a synchronization segment (10122) ensuring the process flow between the one or more external system modules (11) and the risk-transfer analysis structure of the automated digital system,
a feedback loop (540) provided by the security monitor (106) including the machine learning structure to allow learning for the one or more external system modules (11) based on past data and on a random task sampling approach, and
a searchable system module library (104) providing a listing of acceptable external system modules (11) hosted in the host environment.

2. The open, digital data driven underwriting and loss event simulation platform (1) according to claim 1, **characterized in that** the network infrastructure (103) is a cloud-based infrastructure (1031) providing access to the open system architecture (102) for the one or more external system modules (11) via a digital data transmission network (12).

3. The open, digital data driven underwriting and loss event simulation platform (1) according to claim 1 or 2, **characterized in that** one or more external system modules (11) are third party modules technically independent from the automated digital processing core (10).

4. The open, digital data driven underwriting and loss event simulation platform (1) according to one of the claims 1 to 3, **characterized in that** the data interface (1011) comprises data extraction means (1002) for automatically capturing input data (10011) providing physical measurement values of risk measurements of measuring devices (13) via one or more external system module (11).

5. The open, digital data driven underwriting and loss event simulation platform (1) according to claim 4, **characterized in that** the physical measurement values captured by the extraction means (1002) include: technical property characteristics values, environmental characteristics values, physiological characteristics values and/or statistical characteristics values.

6. The open, digital data driven underwriting and loss event simulation platform (1) according to one of the claims 1 to 5, **characterized in that** the security parameters (10611) of the one or more filter means (1061) comprise risk-transfer policy requirements defining required risk-transfer characteristics for the one or more external system modules (11).

7. The open, digital data driven underwriting and loss event simulation platform (1) according to one of the claims 1 to 6, **characterized in that** the electronic connector (105) comprises an application programming interface (1051) for automated providing access for the one or more external system module (11) to the processing entity (101).

8. The open, digital data driven underwriting and loss event simulation platform (1) according to one of the claims 1 to 7, **characterized in that** the automated digital processing core (10) comprises a search engine (107 ) for searching the listing of acceptable external system modules (11/ 11,...,114) of the system module library (104), wherein the search engine (107) identifying input data (10011) related to damage or loss (100110) and/or input data (10011) related to loss events (100111) and/or for identifying input data processing structures (100113) of the external system modules(11).

9. The open, digital data driven underwriting and loss event simulation platform (1) according to one of the claims 1 to 8, **characterized in that** the security monitor (106) comprises a firewall module (1062), a security module (1062) and/or a gateway module (1064) for selectively blocking integration of an external system module (11) into the automated digital system (1).

10. The open, digital data driven underwriting and loss event simulation platform (1) according to one of the claims 1 to 9, **characterized in that** the security monitor (106) comprises a validation protocol (1065) for repeated application of the one or more filter means (1061) to the one or more external system modules (11).

11. The open, digital data driven underwriting and loss event simulation platform (1) according to one of the claims 1 to 10, **characterized in that** the security monitor (106) comprises a feedback loop (1066) providing feedback information to an external system module (11), which is filtered out by the filter means (1061).

12. The open, digital data driven underwriting and loss event simulation platform (1) according to one of the claims 1 to 11, **characterized in that** the automated digital processing core (10) comprises a subscription unit (108) with a counting module for counting activation of the one or more external system modules (11) by the digital processing core (10).

13. The open, digital data driven underwriting and loss event simulation platform (1) according to one of the claims 1 to 12, **characterized in that** at least one user client device (14) is connectable to the automated digital processing core (10) and the open system architecture(102) via a digital network (12), wherein the at least one user client device (14) comprises access means for accessing the searchable system module library (104) and selecting one or more external system module (11) for requesting access to the digital processing core (10).

14. The open, digital data driven underwriting and loss event simulation platform (1) according to one of the claims 1 to 13, **characterized in that** the defined loss events (2) are property and casualty events at least comprising fire events (21) and/or vehicle accidents (22) and/or weather events (23) and/or natural catastrophe events (20).

15. The open, digital data driven underwriting and loss event simulation platform (1) according to one of the claims 1 to 14, **characterized in that** the defined loss events (2) comprise or are life and/or health events (24) at least comprising health events (241) and/or life events (242) and/or critical illness events (243).

## Patentansprüche

1. Offene digitale datengesteuerte Underwriting- und Verlustereignissimulationsplattform (1), die einen automatisierten digitalen Verarbeitungskern (10) zur Risikotransferbeurteilung basierend auf Risikomessungen umfasst, die Messungen für potenzielle Schäden oder Verluste bereitstellen, die ein zukünftiges Eintreten eines definierten Verlustereignisses (2) betreffen, das eine physische Auswirkung oder einen Verlust (4) an einer dem Ereignis ausgesetzten Struktur, einem Objekt oder einem Individuum (3) verursacht, wobei der automatisierte digitale Verarbeitungskern (10) eine Verarbeitungsentität (101) mit einer Datenschnittstelle (100) zum Empfangen von Eingabedaten (10011) physischer Messwerte (100111) umfasst, die einen Risikoparameter quantifizieren, der durch Messvorrichtungen (6) aufgenommen wird, und eine Risikotransferanalysestruktur (1012) zum Verarbeiten der Eingabedaten (10011) und Zuordnen eines oder mehrerer Risikokennwerte (10121), die den potenziellen Schaden oder Verlust quantifizieren, und einen Ausgangssignalgenerator (1012), der den einen oder die mehreren Risikokennwerte (10121) als ein Ausgangssignal (10012) des automatisierten digitalen Verarbeitungskerns (10) bereitstellt,
wobei das offene datengesteuerte System (1) Folgendes umfasst
eine offene Systemarchitektur (102) und eine Netzwerkinfrastruktur (103) zum Bereitstellen einer Host-Umgebung für eine Vielzahl externer Systemmodule (11), wobei die Vielzahl externer Systemmodule (11) Eingabedaten (10011) über die Datenschnittstelle (100) bereitstellt und Eingabedaten-Verarbeitungsmodule (100113), die der Risikotransferanalysestruktur (1011) als Datenverarbeitungsteil zugeordnet sind,
einen elektronischen Verbinder (105) zum Bereitstellen von Zugang für die externen Systemmodule (11) zu der Verarbeitungsentität (101) des automatisierten digitalen Verarbeitungskerns (10) über die Netzwerkinfrastruktur (103), wobei die offene Systemarchitektur mindestens einen digitalen Architekturteil umfasst, der einen offenen Quellcode aufweist, der für die externen Systemmodule (11) zugänglich ist, und wobei die externen Systemmodule (11) an den automatisierten digitalen Verarbeitungskern (10) über den offenen Quellcode angedockt werden, indem ihre Eingabedaten (10011) und Eingabedaten-Verarbeitungsmodule (100113) der digitalen Systemplattform (1) bereitgestellt werden, und die externen Systemmodule (11) in die Risikotransferanalysestruktur (1011) als Verarbeitungsentität über die Netzwerkinfrastruktur integriert sind,
einen Sicherheitsmonitor (106), der ein oder mehrere Filtermittel (1061) umfasst, die zwischen dem digitalen Verarbeitungskern (10) und dem einen oder den mehreren externen Systemmodulen (11) eingerichtet sind, wobei das eine oder die mehreren Filtermittel (1061) einstellbare Sicherheitsparameter (10611) umfassen, die technische Kennparameterwerte für das eine oder die mehreren externen Systemmodule (11) zum Akzeptieren oder Blockieren eines Zugriffs des einen oder der mehreren externen Systemmodule (11) auf den digitalen Verarbeitungskern (10) definieren,
eine Eingabedaten-Verarbeitungsstruktur (100113), die durch das eine oder die mehreren externen Systemmodule (11) bereitgestellt wird, die eine Messwertvergleichsstruktur beinhaltet, die Werte des automatisierten digitalen Systems und des einen oder der mehreren externen Systemmodule (11), eine Daten-Standardisierungsstruktur, einer Messwert-Gewichtungsstruktur, Datenvalidierungsstruktur zur wiederholten Anwendung des einen oder der mehreren Filtermittel auf das eine oder die mehreren externen Systemmodule (11) vergleicht, wobei eine Sicherheitsprüfung in vordefinierten Zeitintervallen eingeleitet wird, indem das eine oder die mehreren Filtermittel auf das eine oder die mehreren externen Systemmodule (11) in der Systemmodulbibliothek angewendet werden, eine Machine-Learning-Struktur, die in die Risikotransferanalysestruktur über ein Synchronisationssegment (10122) integrierbar ist, das den Prozessablauf zwischen dem einen oder den mehreren externen Systemmodulen (11) und der Risikotransferanalysestruktur des automatisierten digitalen Systems sicherstellt,
eine Rückkopplungsschleife (540), die von dem Sicherheitsmonitor (106) bereitgestellt wird, die die Machine-Learning-Struktur beinhaltet, um das Lernen für das eine oder die mehreren externen Systemmodule (11) basierend auf vergangenen Daten und auf einem zufälligen Aufgabenstichprobenansatz erlaubt, und
eine durchsuchbare Systemmodulbibliothek (104), die eine Auflistung akzeptabler externer Systemmodule (11), die in der Host-Umgebung gehostet werden, bereitstellt.

2. Offene digitale datengesteuerte Underwriting- und Verlustereignissimulationsplattform (1) nach Anspruch 1, **dadurch gekennzeichnet, dass** die Netzwerkinfrastruktur (103) eine Cloud-basierte Infrastruktur (1031) ist, die für das eine oder die mehreren externen Systemmodule (11) über ein digitales Datenübertragungsnetzwerk (12) Zugang zu der offenen Systemarchitektur (102) bereitstellt.

3. Offene digitale datengesteuerte Underwriting- und Verlustereignissimulationsplattform (1) nach Anspruch 1 oder 2, **dadurch gekennzeichnet, dass** ein oder mehrere externe Systemmodule (11) Drittparteimodule sind, die technisch von dem automatisierten digitalen Verarbeitungskern (10) unabhängig sind.

4. Offene digitale datengesteuerte Underwriting- und Verlustereignissimulationsplattform (1) nach einem der Ansprüche 1 bis 3, **dadurch gekennzeichnet, dass** die Datenschnittstelle (1011) Datenextraktionsmittel (1002) zum automatischen Aufzeichnen von Eingabedaten (10011) umfasst, die physische Messwerte von Risikomessungen von Messvorrichtungen (13) über ein oder mehrere externe Systemmodule (11) bereitstellen.

5. Offene digitale datengesteuerte Underwriting- und Verlustereignissimulationsplattform (1) nach Anspruch 4, **dadurch gekennzeichnet, dass** die physischen Messwerte, die von dem Extraktionsmittel (1002) aufgezeichnet werden, Folgendes beinhalten: technische Eigenschaftskennwerte, Umweltkennwerte, physiologische Kennwerte und/oder statistische Kennwerte.

6. Offene digitale datengesteuerte Underwriting- und Verlustereignissimulationsplattform (1) nach einem der Ansprüche 1 bis 5, **dadurch gekennzeichnet, dass** die Sicherheitsparameter (10611) des einen oder der mehreren Filtermittel (1061) Risikotransferrichtlinienanforderungen umfassen, die erforderliche Risikotransfermerkmale für das eine oder die mehreren externen Systemmodule (11) definieren.

7. Offene digitale datengesteuerte Underwriting- und Verlustereignissimulationsplattform (1) nach einem der Ansprüche 1 bis 6, **dadurch gekennzeichnet, dass** der elektronische Verbinder (105) eine Anwendungsprogrammierschnittstelle (1051) zur automatisierten Zugangsbereitstellung für das eine oder die mehreren externen Systemmodule (11) zu der Verarbeitungsentität (101) umfasst.

8. Offene digitale datengesteuerte Underwriting- und Verlustereignissimulationsplattform (1) nach einem der Ansprüche 1 bis 7, **dadurch gekennzeichnet, dass** der automatisierte digitale Verarbeitungskern (10) eine Suchmaschine (107) zum Durchsuchen der Auflistung akzeptabler externer Systemmodule (11/111, ..., 114) der Systemmodulbibliothek (104) umfasst,
wobei die Suchmaschine (107) Eingabedaten (10011), die Schaden oder Verlust (100110) betreffen, und/oder Eingabedaten (10011) betreffen, die Verlustereignisse (100111) betreffen, und/oder zum Identifizieren von Eingabedaten-Verarbeitungsstrukturen (100113) der externen Systemmodule (11) identifiziert.

9. Offene digitale datengesteuerte Underwriting- und Verlustereignissimulationsplattform (1) nach einem der Ansprüche 1 bis 8, **dadurch gekennzeichnet, dass** der Sicherheitsmonitor (106) ein Firewall-Modul (1062), ein Sicherheitsmodul (1062) und/oder ein Gateway-Modul (1064) zum selektiv Blockieren von Integration eines externen Systemmoduls (11) in das automatisiertes digitale System (1) umfasst.

10. Offene digitale datengesteuerte Underwriting- und Verlustereignissimulationsplattform (1) nach einem der Ansprüche 1 bis 9, **dadurch gekennzeichnet, dass** der Sicherheitsmonitor (106) ein Validierungsprotokoll (1065) zur wiederholten Anwendung des einen oder der mehreren Filtermittel (1061) auf das eine oder die mehreren externen Systemmodule (11) umfasst.

11. Offene digitale datengesteuerte Underwriting- und Verlustereignissimulationsplattform (1) nach einem der Ansprüche 1 bis 10, **dadurch gekennzeichnet, dass** der Sicherheitsmonitor (106) eine Rückkopplungsschleife (1066) umfasst, die Rückkopplungsinformationen an ein externes Systemmodul (11), das durch die Filtermittel (1061) herausgefiltert wird, bereitstellt.

12. Offene digitale datengesteuerte Underwriting- und Verlustereignissimulationsplattform (1) nach einem der Ansprüche 1 bis 11, **dadurch gekennzeichnet, dass** der automatisierte digitale Verarbeitungskern (10) eine Underwriting-Einheit (108) mit einem Zählmodul zum Zählen von Aktivierung des einen oder der mehreren externen Systemmodule (11) durch den digitalen Verarbeitungskern (10) umfasst.

13. Offene digitale datengesteuerte Underwriting- und Verlustereignissimulationsplattform (1) nach einem der Ansprüche 1 bis 12, **dadurch gekennzeichnet, dass** mindestens eine Benutzer-Client-Vorrichtung (14) mit dem automatisierten digitalen Verarbeitungskern (10) und der offenen Systemarchitektur (102) über ein digitales Netzwerk (12) verbindbar ist, wobei die mindestens eine Benutzer-Client-Vorrichtung (14) Zugangsmittel zum Zugreifen auf die durchsuchbare Systemmodulbibliothek (104) und Auswählen eines oder mehrerer externer Systemmodule (11) zum Anfordern von Zugang zu dem digitalen Verarbeitungskern (10) umfasst.

14. Offene digitale datengesteuerte Underwriting- und Verlustereignissimulationsplattform (1) nach einem der Ansprüche 1 bis 13, **dadurch gekennzeichnet, dass** die definierten Verlustereignisse (2) Sach- und Haftpflichtereignisse sind, die mindestens Brandereignisse (21) und/oder Fahrzeugunfälle (22) und/oder Wetterereignisse (23) und/oder Naturkatastrophenereignisse (20) umfassen.

15. Offene digitale datengesteuerte Underwriting- und Verlustereignissimulationsplattform (1) nach einem der Ansprüche 1 bis 14, **dadurch gekennzeichnet, dass** die definierten Verlustereignisse (2) Lebens- und/oder Gesundheitsereignisse (24) umfassen oder sind, die mindestens Gesundheitsereignisse (241) und/oder Lebensereignisse (242) und/oder kritische Erkrankungsereignisse (243) umfassen.

## Revendications

1. Plateforme ouverte de souscription et de simulation de sinistres, fondée sur des données numériques (1), comprenant un cœur de traitement numérique automatisé (10) pour l'évaluation du transfert de risques, basée sur des mesures de risques fournissant des mesures des dommages ou pertes potentiels liés à une survenance future d'un sinistre défini (2) provoquant un impact ou une perte physique (4) sur une structure, un objet ou une personne exposée à l'événement (3), dans laquelle le cœur de traitement numérique automatisé (10) comprend une entité de traitement (101) avec une interface de données (100) pour recevoir des données d'entrée (10011) de valeurs de mesure physique (100111) quantifiant un paramètre de risque capturé par des dispositifs de mesure (6) et une structure d'analyse de transfert de risques (1012) pour traiter les données d'entrée (10011) et attribuer un ou plusieurs scores de mesure des risques (10121) quantifiant le dommage ou la perte potentiels et un générateur de signal de sortie (1012) fournissant le ou les scores de mesure de risques (10121) sous forme de signal de sortie (10012) du cœur de traitement numérique automatisé (10),
dans laquelle le système ouvert fondé sur des données (1) comprend :
une architecture de système ouverte (102) et une infrastructure de réseau (103) fournissant un environnement hôte à une pluralité de modules de systèmes externes (11), la pluralité de modules de systèmes externes (11) fournissant des données d'entrée (10011) via l'interface de données (100) et fournissant des modules de traitement de données d'entrée (100113) étant affectés comme partie de traitement de données à la structure d'analyse du transfert de risques (1011) ; un connecteur électronique (105) permettant aux modules de systèmes externes (11) d'accéder à l'entité de traitement (101) du cœur de traitement numérique automatisé (10) via l'infrastructure de réseau (103), dans laquelle l'architecture de système ouverte comprend au moins une section d'architecture numérique dont le code source ouvert est accessible aux modules de systèmes externes (11) et dans laquelle les modules de systèmes externes (11) sont connectés au cœur de traitement numérique automatisé (10) via le code source ouvert en fournissant leurs données d'entrée (10011) et les modules de traitement de données d'entrée (100113) à la plateforme de système numérique (1) et les modules de systèmes externes (11) sont intégrés à la structure d'analyse de transfert de risques (1011) en tant qu'entité de traitement via l'infrastructure de réseau,
un moniteur de sécurité (106) comprenant un ou plusieurs moyens de filtrage (1061) disposés entre le cœur de traitement numérique (10) et le ou les modules de système externe (11), dans laquelle le ou les moyens de filtrage (1061) comprennent des paramètres de sécurité configurables (10611) définissant les valeurs de paramètres caractéristiques techniques du ou des modules de systèmes externes (11) afin d'autoriser ou de bloquer un accès du ou des modules de systèmes externes (11) au cœur de traitement numérique (10),
une structure de traitement des données d'entrée (100113) fournie par le ou les modules de systèmes externes (11) comprenant une structure de comparaison des valeurs de mesure comparant les valeurs du système numérique automatisé et du ou des modules de systèmes externes (11), une structure de normalisation des données, une structure de pondération des valeurs de mesure, une structure de validation des données pour l'application répétée d'un ou plusieurs moyens de filtrage à un ou plusieurs modules de systèmes externes (11) lançant un contrôle de sécurité, à intervalles de temps prédéfinis, en appliquant le ou les moyens de filtrage au ou aux modules de systèmes externes (11) dans la bibliothèque de modules de système, une structure d'apprentissage automatique, qui est intégrable à la structure d'analyse de transfert de risque via un segment de synchronisation (10122) assurant le flux de processus entre le ou les modules de systèmes externes (11) et la structure d'analyse de transfert de risque du système numérique automatisé,
une boucle de rétroaction (540) fournie par le moniteur de sécurité (106) incluant la structure d'apprentissage automatique pour permettre l'entraînement du ou des modules de systèmes externes (11) sur la base de données anciennes et d'une approche d'échantillonnage aléatoire des tâches et
une bibliothèque de modules de système consultable (104) fournissant une liste de modules de systèmes externes (11) acceptables hébergés dans l'environnement hôte.

2. Plateforme ouverte de souscription et de simulation de sinistres, fondée sur des données numériques (1), selon la revendication 1, **caractérisée en ce que** l'infrastructure de réseau (103) est une infrastructure basée sur le cloud (1031) offrant un accès à l'architecture de système ouverte (102) pour un ou plusieurs modules de systèmes externes (11) via un réseau de transmission de données numériques (12).

3. Plateforme ouverte de souscription et de simulation de sinistres, fondée sur des données numériques (1), selon la revendication 1 ou 2, **caractérisée en ce qu'**un ou plusieurs modules de systèmes externes (11) sont des modules tiers techniquement indépendants du cœur de traitement numérique automatisé (10).

4. Plateforme ouverte de souscription et de simulation de sinistres, fondée sur des données numériques (1), selon une des revendications 1 à 3, **caractérisée en ce que** l'interface de données (1011) comprend des moyens d'extraction de données (1002) pour capture automatique de données d'entrée (10011) fournissant des valeurs de mesure physique des mesures de risque des dispositifs de mesure (13) via un ou plusieurs modules de systèmes externes (11).

5. Plateforme ouverte de souscription et de simulation de sinistres, fondée sur des données numériques (1), selon la revendication 4, **caractérisée en ce que** les valeurs de mesure physique capturées par les moyens d'extraction (1002) comprennent : des valeurs de caractéristiques techniques de biens, des valeurs de caractéristiques environnementales, des valeurs de caractéristiques physiologiques et/ou des valeurs de caractéristiques statistiques.

6. Plateforme ouverte de souscription et de simulation de sinistres, fondée sur des données numériques (1), selon une des revendications 1 à 5, **caractérisée en ce que** les paramètres de sécurité (10611) du ou des moyens de filtrage (1061) comprennent des exigences de politique de transfert de risques définissant les caractéristiques de transfert de risques requises pour le ou les modules de systèmes externes (11).

7. Plateforme ouverte de souscription et de simulation de sinistres, fondée sur des données numériques (1), selon une des revendications 1 à 6, **caractérisée en ce que** le connecteur électronique (105) comprend une interface de programmation d'application (1051) permettant l'accès automatisé du ou des modules de systèmes externes (11) à l'entité de traitement (101).

8. Plateforme ouverte de souscription et de simulation de sinistres, fondée sur des données numériques (1), selon une des revendications 1 à 7, **caractérisée en ce que** le cœur de traitement numérique automatisé (10) comprend un moteur de recherche (107) pour parcourir la liste des modules de systèmes externes acceptables (11/111, ..., 114) de la bibliothèque de modules de système (104), dans laquelle le moteur de recherche (107) identifie les données d'entrée (10011) relatives aux dommages ou aux pertes (100110) et/ou les données d'entrée (10011) relatives aux sinistres (100111) et/ou pour identifier les structures de traitement des données d'entrée (100113) des modules de systèmes externes (11).

9. Plateforme ouverte de souscription et de simulation de sinistres, fondée sur des données numériques (1), selon une des revendications 1 à 8, **caractérisée en ce que** le moniteur de sécurité (106) comprend un module pare-feu (1062), un module de sécurité (1062) et/ou un module de passerelle (1064) pour bloquer sélectivement l'intégration d'un module de système externe (11) dans le système numérique automatisé (1).

10. Plateforme ouverte de souscription et de simulation de sinistres, fondée sur des données numériques (1), selon une des revendications 1 à 9, caractérisée en que le moniteur de sécurité (106) comprend un protocole de validation (1065) pour l'application répétée d'un ou plusieurs moyens de filtrage (1061) à un ou plusieurs modules de systèmes externes (11).

11. Plateforme ouverte de souscription et de simulation de sinistres, fondée sur des données numériques (1), selon une des revendications 1 à 10, **caractérisée en ce que** le moniteur de sécurité (106) comprend une boucle de rétroaction (1066) fournissant des informations de rétroaction à un module de système externe (11), lesquelles informations sont filtrées par les moyens de filtrage (1061).

12. Plateforme ouverte de souscription et de simulation de sinistres, fondée sur des données numériques (1), selon une des revendications 1 à 11, **caractérisée en ce que** le cœur de traitement numérique automatisé (10) comprend une unité d'abonnement (108) dotée d'un module de comptage pour comptabiliser l'activation d'un ou plusieurs modules de système externes (11) par le cœur de traitement numérique (10).

13. Plateforme ouverte de souscription et de simulation de sinistres, fondée sur des données numériques (1), selon une des revendications 1 à 12, **caractérisée en ce qu'**au moins un dispositif client utilisateur (14) est connectable au cœur de traitement numérique automatisé (10) et à l'architecture de système ouverte (102) via un réseau numérique (12), dans lequel au moins un dispositif client utilisateur (14) comprend des moyens d'accès pour accéder à la bibliothèque de modules de système consultable (104) et de sélectionner un ou plusieurs modules de systèmes externes (11) pour demander l'accès au cœur de traitement numérique (10).

14. Plateforme ouverte de souscription et de simulation de sinistres, fondée sur des données numériques (1), selon une des revendications 1 à 13, **caractérisée en ce que** les sinistres définis (2) sont des sinistres matériels et corporels comprenant au moins des sinistres liés aux incendies (21) et/ou des accidents de véhicules (22) et/ou des événements météorologiques (23) et/ou des catastrophes naturelles (20).

15. Plateforme ouverte de souscription et de simulation de sinistres, fondée sur des données numériques (1), selon une des revendications 1 à 14, **caractérisée en ce que** les sinistres définis (2) comprennent ou sont des événements marquants et/ou problèmes de santé (24) comprenant au moins des problèmes de santé (241) et/ou des événements marquants (242) et/ou des événements de maladie grave (243).
